# EUROPÄISCHE PATENTSCHRIFT

(11) **EP 1 674 308 B1**
(45) Veröffentlichungstag und Bekanntmachung des Hinweises auf die Patenterteilung: **25.03.2009**
(21) Anmeldenummer: 04293103.0
(22) Anmeldetag: 22.12.2004
(51) Int. Cl.: B60H 1/00

(54) **Klimaanlage, insbesondere Zusatzklimaanlage mit elektrischem Zuheizer**
Air conditioning unit, in particular an auxiliary air conditioning unit with electrical supplementary heater
Installation de climatisation, en particulier installation de climatisation auxiliaire avec chauffage supplémentaire électrique

(43) Veröffentlichungstag der Anmeldung: 28.06.2006
(73) Patentinhaber: Behr France Rouffach SAS, 68250 Rouffach (FR)
(72) Erfinder: Klein, Henri, 68000 Colmar (FR)
(74) Vertreter: Grauel, Andreas

(56) Entgegenhaltungen:
- EP-A- 0 668 177
- EP-A- 1 457 369
- WO-A-01/38803
- US-A- 5 309 731
- US-A- 5 478 274

## Beschreibung

Die Erfindung betrifft eine Klimaanlage, insbesondere eine Zusatzklimaanlage, die beispielsweise im Fondbereich angeordnet ist, mit elektrischem Zuheizer gemäß dem Oberbegriff des Anspruches 1. Eine gattungsgemäße Klimaanlage ist in EP 0 668 177 A1 offenbart.

Bei Klimaanlagen sind häufig elektrische Zuheizer, insbesondere PTC-Zuheizer, vorgesehen, um insbesondere beim Starten des Motors schnell den Fahrgastraum erwärmen zu können. Diese elektrischen Zuheizer sind bei herkömmlichen Kraftfahrzeug-Klimaanlagen in aller Regel nach dem Heizkörper oder teilweise in denselben integriert angeordnet.

Bekannte Zusatzklimaanlagen für den Fondbereich weisen entweder nur einen Verdampfer oder einen Verdampfer und Heizkörper auf. So ist beispielsweise in der EP 1 457 369 A1 eine Kraftfahrzeug-Zusatzklimaanlage für ein mit einer Haupt-Klimaanlage ausgestattetes Kraftfahrzeug bekannt, bei welchem die Zusatzklimaanlage folgende in einem Gehäuse angeordnete Komponenten aufweist: ein Gebläse, eine elektrische Zusatzheizung und einen Verdampfer. Hierbei sind die Zusatzheizung und der Verdampfer nach dem Gebläse in zwei unterschiedlichen Luftkanälen angeordnet, wobei eine um einen Winkel verschwenkbare Klappe, die am Ende der die Luftkanäle voneinander trennenden Wand angeordnet ist, durch ihre Stellung die Verteilung des vom Gebläse kommenden Luftstroms übernimmt. Hierbei sind die Zusatzheizung und der Verdampfer jeweils derart angeordnet, dass die Klappe in jeder ihrer Endstellungen den Luftstrom möglichst senkrecht zur freigegebenen Komponente, d.h. zur Zusatzheizung oder zum Verdampfer, leitet. Ferner kann auf der Seite des Verdampfers eine zweite Klappe vorgesehen sein, welche einen Bypass um den Verdampfer freigibt oder verschließt, wobei auch eine teilweise Freigabe möglich ist.

Der Erfindung liegt die Aufgabe zugrunde, eine Klimaanlage der eingangs genannten Art mit elektrischer Zusatzheizung und Verdampfer zu verbessern, insbesondere wenn aus Bauraumgründen eine Anordnung von Zusatzheizung und Verdampfer in einem Winkel nicht möglich ist.

Diese Aufgabe wird erfindungsgemäß durch eine Klimaanlage mit den Merkmalen des Anspruches 1 gelöst. Vorteilhafte Ausgestaltungen sind Gegenstand der Unteransprüche.

Erfindungsgemäß ist eine Klimaanlage, insbesondere eine Zusatzklimaanlage, die beispielsweise im Fondbereich angeordnet ist, mit einem in einem Gehäuse angeordneten Verdampfer und einem elektrischen Zuheizer vorgesehen, wobei der elektrische Zuheizer räumlich zwischen dem Gebläse und dem Verdampfer angeordnet ist. Diese Anordnung stellt sicher, dass kein Spritzwasser vom Verdampfer zum elektrischen Zuheizer gelangen kann, so dass elektrischer Zuheizer und Verdampfer räumlich nahe beisammen angeordnet werden können, wodurch der erforderliche Bauraum relativ gering gehalten werden kann.

Bevorzugt sind der elektrische Zuheizer und der Verdampfer versetzt und in einem Winkel von maximal 20° zueinander angeordnet. Dies ermöglicht eine - bezogen auf beengte Verhältnisse - strömungstechnisch gesehen gute Ausgestaltung des oder der Luftkanäle.

Der Versatz entspricht bevorzugt maximal der Verdampferbreite, insbesondere maximal der Hälfte der Verdampferbreite, insbesondere bevorzugt maximal einem Drittel der Verdampferbreite, wodurch sich geringe Baubreiten realisieren lassen.

Der Winkel zwischen den luftdurchströmten Flächen von Verdampfer und elektrischem Zuheizer beträgt bevorzugt maximal 15°.

Gemäß einer Ausführungsform ist der Verdampfer im Luftkanal hinter dem elektrischen Zuheizer angeordnet, d.h. der gesamte Luftstrom durchströmt den elektrischen Zuheizer. Der Luftstrom kann anschließend geregelt durch eine Klappe durch den Verdampfer oder einen parallel hierzu verlaufenden Bypass strömen.

Alternativ sind der Verdampfer und der elektrische Zuheizer nach einer Verzweigung des Luftkanals in getrennten Luftkanälen angeordnet, wobei die Luftkanäle nach dem elektrischen Zuheizer und dem Verdampfer wieder zusammengeführt sind. Die Regelung des Luftstroms kann mittels je einer in jedem der Luftkanäle angeordneten Klappe erfolgen. Hierbei ist bevorzugt eine Klappe etwa auf der Höhe des elektrischen Zuheizers im Verdampfer-Luftkanal und die zweite Klappe etwa auf der Höhe des Verdampfers im Zuheizer-Luftkanal angeordnet.

Im Folgenden ist die Erfindung anhand zweier Ausführungsbeispiele näher erläutert. Es zeigen:
- Fig. 1: einen Schnitt durch eine Kraftfahrzeug-Klimaanlage gemäß dem ersten Ausführungsbeispiel,
- Fig. 2: und eine Variante des ersten Ausführungsbeispiels bezüglich der Luftverteilung zum Fahrzeuginnenraum, und
- Fig. 3: einen Schnitt durch eine Kraftfahrzeug-Klimaanlage gemäß dem zweiten Ausführungsbeispiel.

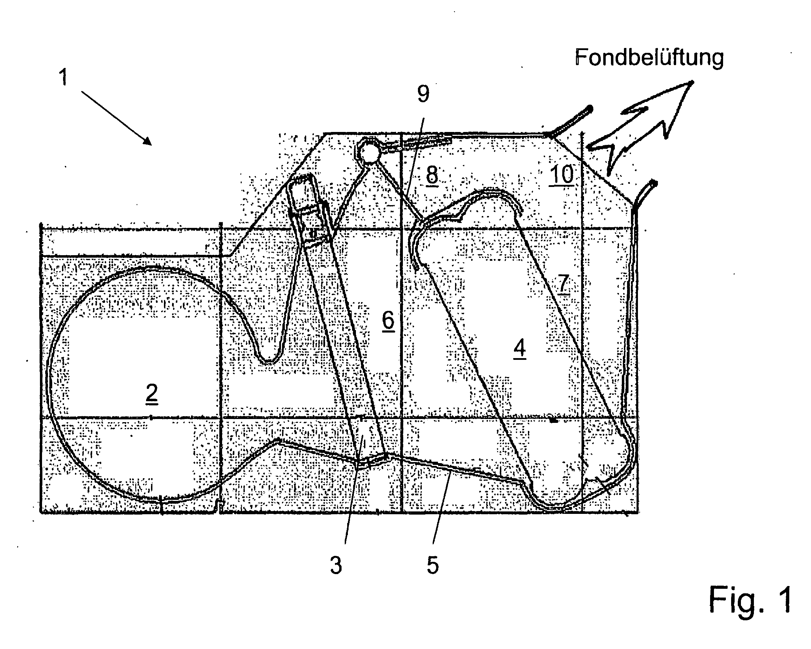

Eine Kraftfahrzeug-Klimaanlage 1, welche als zusätzliche Fond-Klimaanlage dient, weist ein Gebläse 2, einen elektrischen Zuheizer 3 und einen Verdampfer 4 auf, die in einem Luftführungsgehäuse 5 angeordnet sind. Gemäß dem ersten, in Fig. 1 dargestellten Ausführungsbeispiel durchströmt die vom Gebläse 2 aus der Umgebung oder dem Fahrzeuginnenraum angesaugte Luft zuerst den elektrischen Zuheizer 3 bevor eine Verzweigung 6 vorgesehen ist, wobei ein Luftkanal 7 die vom elektrischen Zuheizer 3 kommende Luft durch den Verdampfer 4 und der andere Luftkanal oder, wie er auf Grund seiner Funktion im Folgenden bezeichnet ist, Bypass 8 vorbei am Verdampfer 4 führt. Die Regelung der Luftverteilung erfolgt mit Hilfe einer Klappe 9, die im vorderen Teil des Bypasses 8 auf der Außenseite, d.h. im Bereich des Luftführungsgehäuses 5, verschwenkbar angeordnet ist. Im Anschluss an den Luftkanal 7 und den Bypass 8 ist eine Zusammenführung 10 vorgesehen. Vor dem Verdampfer 4 ist vorliegend keine Klappe o.ä. vorgesehen, jedoch ist das Vorsehen einer regelbaren Absperrung möglich.

Um einen möglichst geringen Druckabfall bei möglichst kleinem Bauraum zu erreichen, ist der elektrische Zuheizer 3, wie aus Fig. 1 ersichtlich, derart angeordnet, dass in Verlängerung in der Luftströmungsrichtung durch denselben auf einer Seite der Verdampfer 4 und auf der anderen Seite der Bypass 8 angeordnet ist (vgl. Fig. 1), wobei die Querschnittsfläche des Bypasses 8 deutlich kleiner als die Luftdurchtrittsfläche des Verdampfers 4 ist, so dass der Verdampfer 4 mit etwa 2/3 seiner Luftdurchtrittsfläche in Verlängerung in Luftströmungsrichtung der Luftdurchtrittsfläche des elektrischen Zuheizers 3 angeordnet ist, was im Folgenden als versetzt angeordnet bezeichnet wird. Entsprechend ist der Bypass 8 in die andere Richtung versetzt angeordnet. Der Winkel der Luftdurchtrittsflächen des elektrischen Zuheizers 3 und des Verdampfers 4 beträgt vorliegend ca. 12°, ist also relativ gering.

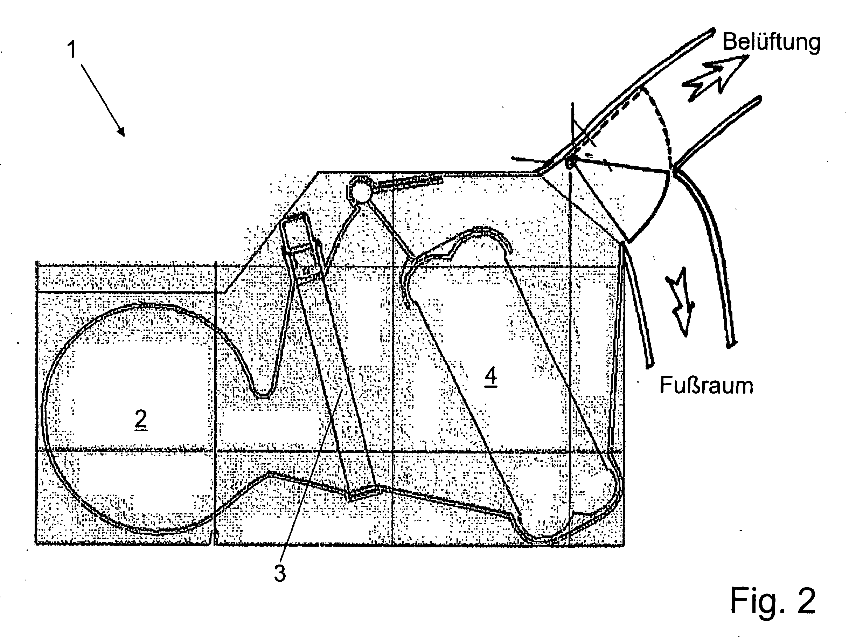

Vorliegend wird der gesamte temperierte Luftstrom dem Fahrzeuginnenraum über die Fondbelüftung zugeführt, jedoch sind andere Verteilungen des Luftstroms möglich. So zeigt Fig. 2 eine Variante des ersten Ausführungsbeispiels, wobei an Stelle des einen Luftkanals zur Fondbelüftung eine Luftkanal-Gabelung mit zwei anschließenden Luftkanälen vorgesehen ist, wobei ein Luftkanal zum Fußraum ("Fußraum") und ein Luftkanal zum Fahrzeuginnenraum zur Belüftung ("Belüftung") führt. Die Regelung der Luftverteilung auf die beiden Luftkanäle erfolgt mittels einer Klappe.

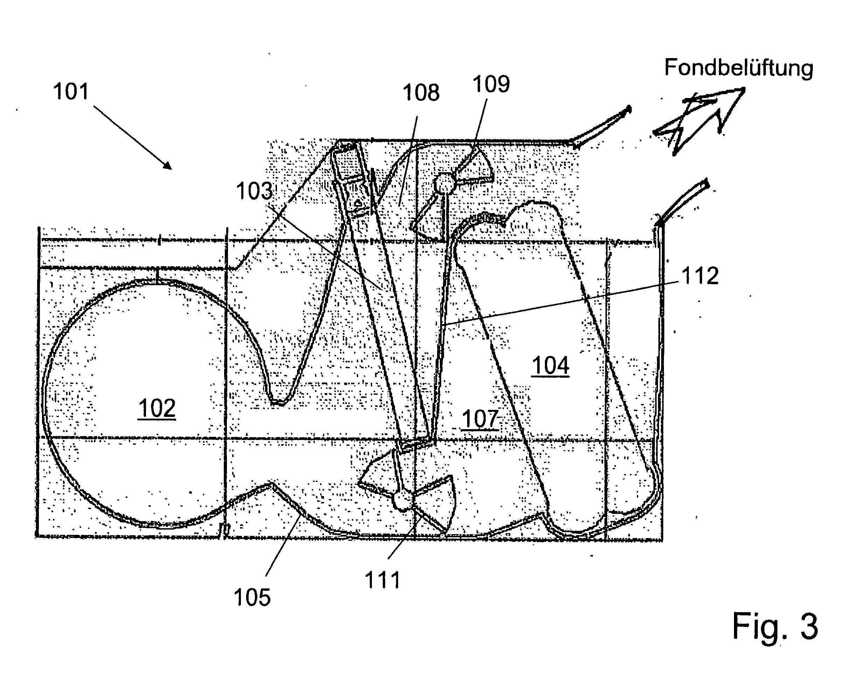

Im Folgenden wird unter Bezugnahme auf Fig. 3 das zweite Ausführungsbeispiel näher erläutert. Hierbei sind gleiche und gleichwirkende Elemente mit um 100 höheren Bezugszeichen versehen als beim zuvor beschriebenen ersten Ausführungsbeispiel. Entsprechend dem ersten Ausführungsbeispiel weist die Kraftfahrzeug-Klimaanlage 101, welche als zusätzliche Fond-Klimaanlage dient, ein Gebläse 102, einen elektrischen Zuheizer 103 und einen Verdampfer 104 auf, die in einem Luftführungsgehäuse 105 angeordnet sind. Im Unterschied zum ersten Ausführungsbeispiel sind jedoch gemäß dem zweiten Ausführungsbeispiel zwei vollständig getrennte Zweige für die zu temperierende Luft vorgesehen, d.h. der elektrische Zuheizer 103 ist in einem anderen Luftkanal angeordnet als der Verdampfer 104. Im Folgenden wird der Luftkanal, in welchem der elektrische Zuheizer 103 angeordnet ist, als Zuheizer-Luftkanal 108 und der Luftkanal, in welchem der Verdampfer 104 angeordnet ist, als Verdampfer-Luftkanal 107 bezeichnet. Am Ende des Zuheizer-Luftkanals 108 ist eine Klappe 109 angeordnet, welche die Luftströmung regelt und ein Rückströmen von Luft aus dem Verdampfer 104 zum elektrischen Zuheizer 103 verhindert. Am Anfang des Verdampfer-Luftkanals 107 ist eine zweite Klappe 111 angeordnet, welche die Luftverteilung mit regelt. Beide Klappen 109 und 111 sind vorliegend als Schmetterlingsklappen mit Schwenkachsen, die im entsprechenden Luftkanal liegen, ausgebildet, jedoch sind auch andere Klappen-Ausgestaltungen möglich.

Der Verdampfer 104 und der elektrische Zuheizer 103 sind, wie aus Fig. 3 ersichtlich, nahezu parallel, jedoch versetzt zueinander angeordnet, wobei vorliegend ein Winkel von 6° zwischen den Luftdurchtrittsflächen vorgesehen ist. Der Versatz von Verdampfer 104 und elektrischem Zuheizer 103 ist derart, dass der Verdampfer 104 mit etwa 2/3 seiner Luftdurchtrittsfläche in Verlängerung in der Luftströmungsrichtung durch den elektrischen Zuheizer 103 angeordnet ist (vgl. Fig. 3), wobei jedoch auf Grund einer die beiden Luftkanäle 107 und 108 trennenden Trennwand 112 keine Querströmung möglich ist.

### Bezugszeichenliste

1, 101 Klimaanlage
2, 102 Gebläse
3, 103 elektrischer Zuheizer
4, 104 Verdampfer
5, 105 Luftführungsgehäuse
6 Verzweigung
7 Luftkanal
8 Bypass
9, 109 Klappe
10 Zusammenführung
107 Verdampfer-Luftkanal
108 Zuheizer-Luftkanal
111 Klappe
112 Trennwand

## Patentansprüche

1. Klimaanlage, insbesondere Kraftfahrzeug-Klimaanlage, mit einem in einem Gehäuse (2; 102) angeordneten Verdampfer (4; 104), einem Gebläse (2; 102) und einem elektrischen Zuheizer (3; 103), wobei der elektrische Zuheizer (3; 103) räumlich zwischen dem Gebläse (2; 102) und dem Verdampfer (4; 104) angeordnet ist, **dadurch gekennzeichnet, dass** ein von einer Klappe (9; 109) geregelter Bypass (8) oder Luftkanal (108) um den Verdampfer (4; 104) vorgesehen ist.

2. Klimaanlage nach Anspruch 1, **dadurch gekennzeichnet, dass** der elektrische Zuheizer (3; 103) und der Verdampfer (4; 104) versetzt und in einem Winkel von maximal 20° zueinander angeordnet sind.

3. Klimaanlage nach Anspruch 1 oder 2, **dadurch gekennzeichnet, dass** der Versatz maximal der Verdampferbreite, insbesondere maximal der Hälfte der Verdampferbreite, entspricht.

4. Klimaanlage nach Anspruch 2 oder 3, **dadurch gekennzeichnet, dass** der Winkel maximal 15° entspricht.

5. Klimaanlage nach einem der vorstehenden Ansprüche, **dadurch gekennzeichnet, dass** der Verdampfer (4) im Luftkanal hinter dem elektrischen Zuheizer (3) angeordnet ist.

6. Klimaanlage nach einem der Ansprüche 1 bis 4, **dadurch gekennzeichnet, dass** der Verdampfer (104) und der elektrische Zuheizer (103) nach einer Verzweigung des Luftkanals in getrennten Luftkanälen (107, 108) angeordnet sind, wobei die Luftkanäle (107, 108) nach dem elektrischen Zuheizer (103) und dem Verdampfer (104) wieder zusammengeführt sind.

7. Klimaanlage nach Anspruch 6, **dadurch gekennzeichnet, dass** die beiden Luftkanäle (107, 108) durch je eine Klappe (111, 109) geregelt werden.

8. Klimaanlage nach Anspruch 7, **dadurch gekennzeichnet, dass** die Klappe (109) im Zuheizer-Luftkanal (108) etwa auf der Höhe des Verdampfers (104) angeordnet ist und/oder die Klappe (111) im Verdampfer-Luftkanal (107) etwa auf der Höhe des elektrischen Zuheizers (103) angeordnet ist.

## Claims

1. Air-conditioning unit, in particular an air-conditioning unit for a motor vehicle, with an evaporator (4; 104), a fan (2; 102) and a supplementary electric heater (3; 103) arranged in a housing (5; 105), the supplementary electric heater (3; 103) being spatially arranged between the fan (2; 102) and the evaporator (4, 104), **characterised in that** a bypass or air duct (108) regulated by a flap (9; 109) is provided around the evaporator (4; 104).

2. Air-conditioning unit according to Claim 1, **characterised in that** the supplementary electric heater (3; 103) and the evaporator (4; 104) are arranged offset and at an angle of at most 20° relative to one another.

3. Air-conditioning unit according to Claims 1 or 2, **characterised in that** the offset corresponds to at most the width of the evaporator and in particular at most half the width of the evaporator.

4. Air-conditioning unit according to Claims 2 or 3, **characterised in that** the said angle is at most 15°.

5. Air-conditioning unit according to any of the preceding claims, **characterised in that** the evaporator (4) is arranged in the air duct behind the supplementary electric heater (3).

6. Air-conditioning unit according to any of Claims 1 to 4, **characterised in that** the evaporator (104) and the supplementary electric heater (103) are arranged in separate air ducts (107, 108) after a branching point of the air duct, and beyond the supplementary electric heater (103) and the evaporator (104) the air ducts (107, 108) merge again.

7. Air-conditioning unit according to Claim 6, **characterised in that** the two air ducts (107, 108) are each regulated by a respective flap (111, 109).

8. Air-conditioning unit according to Claim 7, **characterised in that** the flap (109) in the supplementary heater duct (108) is arranged approximately at the level of the evaporator (104) and/or the flap (111) in the evaporator air duct (107) is arranged approximately at the level of the supplementary electric heater (103).

## Revendications

1. Système de climatisation, en particulier système de climatisation d'un véhicule automobile, comprenant un évaporateur (4 ; 104) disposé dans un carter (2 ; 102), un ventilateur (2 ; 102) et un chauffage auxiliaire électrique (3 ; 103), où le chauffage auxiliaire électrique (3 ; 103) est disposé, dans l'espace, entre le ventilateur (2 : 102) et l'évaporateur (4 ; 404), **caractérisé en ce qu'**il est prévu, autour de l'évaporateur (4 ; 404), une dérivation (8) réglée par un volet (9 ; 109) ou bien un conduit d'air (108).

2. Système de climatisation selon la revendication 1, **caractérisé en ce que** le chauffage auxiliaire électrique (3 ; 103) et l'évaporateur (4 ; 104) sont décalés et disposés, l'un par rapport à l'autre, suivant un angle au maximum de 20°.

3. Système de climatisation selon la revendication 1 ou 2, **caractérisé en ce que** le décalage correspond au maximum à la largeur de l'évaporateur, en particulier au maximum à la moitié de la largeur de l'évaporateur.

4. Système de climatisation selon la revendication 2 ou 3, **caractérisé en ce que** l'angle correspond au maximum à 15°.

5. Système de climatisation selon l'une quelconque des revendications précédentes, **caractérisé en ce que** l'évaporateur (4), dans le conduit d'air, est disposé derrière le chauffage auxiliaire électrique (3).

6. Système de climatisation selon l'une quelconque des revendications 1 à 4, **caractérisé en ce que** l'évaporateur (104) et le chauffage auxiliaire électrique (103), en aval d'une dérivation du conduit d'air, sont disposés dans des conduits d'air séparés (107, 108), où les conduits d'air (107, 108), en aval du chauffage auxiliaire électrique (103) et de l'évaporateur (104), sont à nouveau réunis.

7. Système de climatisation selon la revendication 6, **caractérisé en ce que** les deux conduits d'air (107, 108) sont réglés chacun par un volet (111, 109).

8. Système de climatisation selon la revendication 7, **caractérisé en ce que** le volet (109), dans le conduit d'air (108) du chauffage auxiliaire, est disposé à peu près à la hauteur de l'évaporateur (104), et / ou le volet (111), dans le conduit d'air (107) de l'évaporateur, est disposé à peu près à la hauteur du chauffage auxiliaire électrique (103).
